# EUROPEAN PATENT APPLICATION

(11) **EP 4 792 975 A1**
(43) Date of publication of application: **19.08.2026**
(21) Application number: 26157464.4
(22) Date of filing: 10.02.2026
(51) Int. Cl.: B23Q 11/08, A61C 13/00, B23Q 11/10

(54) **CUTTING DEVICE AND METHOD FOR INJECTING LIQUID COOLANT**

(30) Priority: 17.02.2025 JP 2025023335
(71) Applicant: DGSHAPE Corporation, Hamamatsu-shi, Shizuoka 431-2103 (JP)
(72) Inventor: Mochizuki, Ryusuke, Hamamatsu-shi, Shizuoka, 431-2103 (JP); Nagaya, Masamitsu, Hamamatsu-shi, Shizuoka, 431-2103 (JP); Tomimuro, Toshikazu, Hamamatsu-shi, Shizuoka, 431-2103 (JP); Ozeki, Koshi, Hamamatsu-shi, Shizuoka, 431-2103 (JP); Shimizu, Tsuyoshi, Hamamatsu-shi, Shizuoka, 431-2103 (JP)
(74) Representative: Grünecker Patent- und Rechtsanwälte PartG mbB

(57) **Abstract**

A cutting device includes a clamp, a grasping portion, a moving mechanism, and a liquid injection nozzle. The clamp, the grasping portion, the moving mechanism and the liquid injection nozzle are located in a processing chamber. A time counter of a controller is configured or programmed to count time for a predetermined time interval. When the time counted by the time counter reaches the predetermined time interval, an injection controller is configured or programmed to cause the liquid injection nozzle to inject a liquid coolant toward an interior of the processing chamber.

## Description

### BACKGROUND OF THE INVENTION

### Field of the Invention

The present invention relates to cutting devices and methods for injecting a liquid coolant.

### Description of the Related Art

Japanese Patent Application Publication No. 2020-6462 discloses a wet-type cutting device supplying a liquid coolant at the time of cutting. According to this cutting device, a liquid coolant is supplied to a site at which a cutting target is being cut by a cutting tool. As a result, friction at such a site is reduced or prevented and the site is cooled.

When a cutting target is cut by a cutting device, cutting powder of the cutting target is generated. When the liquid coolant is supplied, the liquid coolant collides against the cutting target or the like and is bounced back, and as a result, is splattered inside the cutting device. The liquid coolant is supplied to the site that is being cut, and therefore, the cutting powder of the cutting target is mixed into the splattered liquid coolant.

When the splattered liquid coolant is dried, the cutting powder mixed into the liquid coolant or a substance contained in the liquid coolant is fixed to an interior of the cutting device. If, for example, such cutting powder or such a substance is fixed to the cutting target, a gap between components of a moving mechanism moving the cutting tool, or the like, an operability of moving the cutting target or a grasping portion grasping the cutting tool by the moving mechanism is deteriorated.

### SUMMARY OF THE INVENTION

Example embodiments of the present invention provide cutting devices and methods for injecting a liquid coolant by which an operational failure during movement of a cutting target and a grasping portion is reduced or prevented.

A cutting device according to an example embodiment of the present invention includes a holder to hold a cutting target, a processing chamber housing the holder while the cutting target is processed in the processing chamber, a grasping portion selectively grasp either one of a cutting tool to cut the cutting target or a dummy pin that does not cut the cutting target, the grasping portion being located in the processing chamber, a moving mechanism to move at least one of the holder or the grasping portion relative to the cutting target, a liquid injection portion to inject a liquid coolant toward an interior of the processing chamber, and a controller configured or programmed to control the liquid injection portion and include a time counter configured or programmed to count time for a predetermined time interval, and an injection controller configured or programmed to cause the liquid injection portion to inject the liquid coolant toward the interior of the processing chamber when the time counted by the time counter reaches a predetermined time interval.

According to the above-described cutting device, when the time counted by the time counter reaches the predetermined time interval, the injection controller is configured or programmed to cause the liquid coolant to be injected from the liquid injection portion. The liquid coolant is injected toward the interior of the processing chamber periodically, and therefore, drying of the liquid coolant attached to the interior of the processing chamber is reduced or prevented. Thus, an occurrence of a defect during the movement of the cutting target or the grasping portion by the moving mechanism is reduced or prevented.

A method for injecting a liquid coolant according to an example embodiment of the present invention is a method for injecting a liquid coolant in a cutting device to cut a cutting target. The cutting device includes a holder to hold the cutting target, a processing chamber housing the holder while the cutting target is cut in the processing chamber, a grasping portion to selectively grasp either one of a cutting tool to cut the cutting target or a dummy pin not cutting the cutting target, the grasping portion being located in the processing chamber, a moving mechanism to move at least one of the holder or the grasping portion relative to the cutting target, and a liquid injection portion to inject the liquid coolant toward an interior of the processing chamber. The method for injecting the liquid coolant according to an example embodiment of the present invention includes counting time for a predetermined time interval, and causing the injection portion to inject the liquid coolant toward the interior of the processing chamber when the time counted in the time counting step reaches the predetermined time interval.

According to example embodiments of the present invention, a cutting device and a method for injecting a liquid coolant by which an operational failure during movement of a cutting target and a grasping portion is reduced or prevented are provided.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 a perspective view of a cutting device according to an example embodiment of the present invention.
FIG. 2 is a front view of the cutting device in a state where a front top cover thereof is opened.
FIG. 3 is a vertical cross-sectional view of the cutting device.
FIG. 4 is a perspective view of a cutting target attached to an adapter according to an example embodiment of the present invention.
FIG. 5 is a front view of a bottom end and the vicinity thereof of a spindle.
FIG. 6 is a perspective view of a tool magazine and a clamp according to an example embodiment of the present invention.
FIG. 7 is a front view of the tool magazine and the clamp according to an example embodiment of the present invention.
FIG. 8 is a partially cut front view of the spindle and a dummy pin housing hole.
FIG. 9 is a block diagram of the cutting device according to an example embodiment of the present invention.
FIG. 10 is a flowchart showing a procedure of flushing performed periodically.
FIG. 11A is a front view of a rotation portion and the vicinity thereof while a liquid coolant is being injected.
FIG. 11B is a perspective view showing that the spindle, a liquid injection nozzle, the tool magazine and the clamp are being moved and the clamp is being rotated.
FIG. 11C is a partially cut front view of a dummy pin and the vicinity thereof when a grasping portion is moved under the control of a third movement controller.
FIG. 12 is a view, corresponding to FIG. 11C, of a processing device in another example embodiment of the present invention.

### DETAILED DESCRIPTION OF THE EXAMPLE EMBODIMENTS

Hereinafter, example embodiments of the present invention will be described with reference to the drawings. The example embodiments described herein are not intended to specifically limit the present invention, needless to say. Components and portions having the same functions will bear the same reference signs, and overlapping descriptions will be omitted or simplified as appropriate.

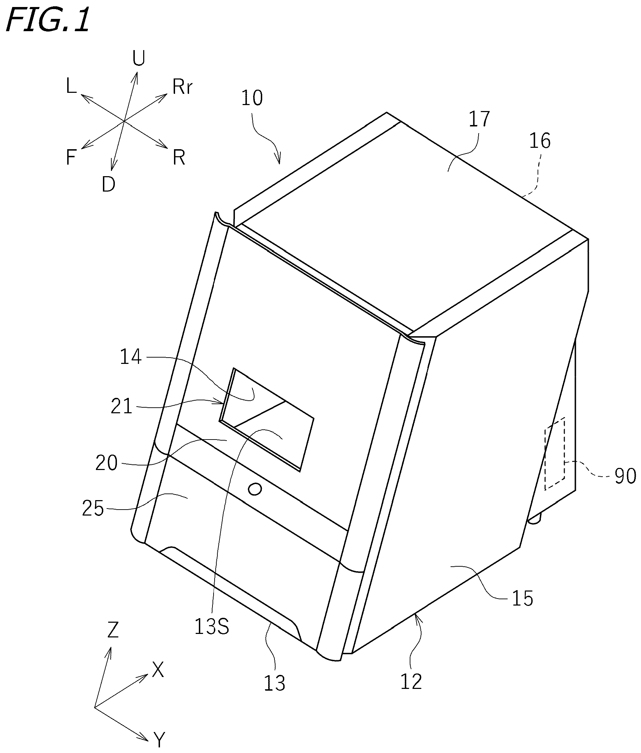

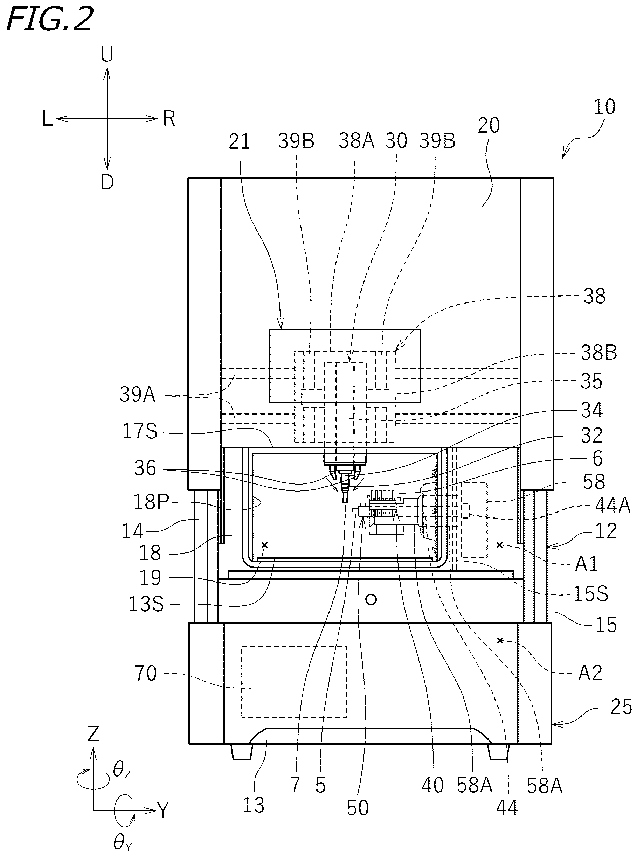

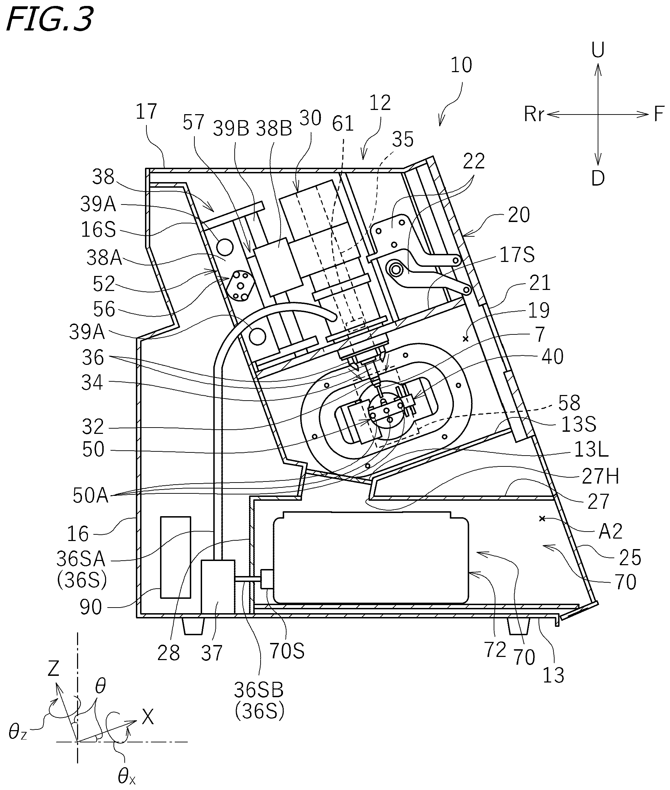

FIG. 1 is a perspective view of a cutting device 10. FIG. 2 is a front view of the cutting device 10. FIG. 3 is a vertical cross-sectional view of the cutting device 10. In the following description, in a state where the cutting device 10 is seen in a front view thereof, a direction away from the cutting device 10 will be referred to as a "forward direction", and a direction toward the cutting device 10 will be referred to as a "rearward direction". The terms "left", "right", "up" and "down" will respectively represent left, right, up and down in a state where the cutting device 10 is seen in a front view thereof. In the drawings, letters F, Rr, L, R, U and D respectively represent front, rear, left, right, up and down. In this example embodiment, the cutting device 10 is located in an XYZ coordinate system. Herein, an X axis extends in a front-rear direction. As shown in FIG. 3, in this example embodiment, the X axis is inclined by *θ* degrees from the horizontal direction. The X axis may extend in the horizontal direction. A Y axis extends in a left-right direction. A Z axis extends in an up-down direction. As shown in FIG. 3, in this example embodiment, the Z axis is inclined by *θ* degrees from the vertical direction. The Z axis may extend in the vertical direction. Reference signs *θ*_{X} *θ*_{Y}, *θ*_{Z}, respectively represent rotation directions around the X axis, the Y axis and the Z axis. Note that the above-described directions are merely defined for the convenience of description, and do not limit the manner of installation of the cutting device 10 in any way or do not limit the present invention in any way.

The cutting device 10 processes (e.g., cuts), and polishes as necessary, a cutting target 5 (see FIG. 2). The cutting device 10 processes the cutting target 5 to produce a molded item for dental use, for example, a dental prosthesis such as a crown, an inlay, an onlay, a veneer or the like; an artificial tooth; a denture base; or the like. The cutting target 5 is shaped like, for example, a block (e.g., a polygonal column). The cutting target 5 may be shaped like a disc. The cutting target 5 is formed of, for example, a resin such as PMMA (methyl polymethacrylate resin), PEEK (polyetheretherketone resin), a hybrid resin or the like, a ceramic material such as a glass ceramic material, zirconia or the like, or any of various other materials including wax, plaster and the like. In the case where zirconia is used as the material of the cutting target 5, semi-sintered zirconia, for example, is used. Note that there is no specific limitation on the shape or the material of the cutting target 5.

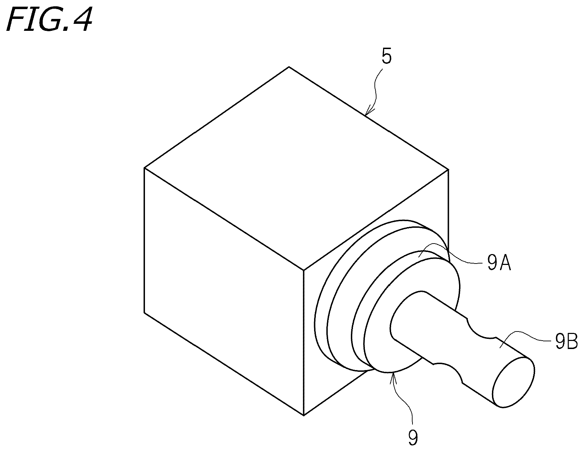

As shown in FIG. 4, in this example embodiment, an adapter 9 (also referred to as a "holder") is attached to the cutting target 5. The cutting target 5 is put into the cutting device 10 (see FIG. 1) and processed in a state where the adapter 9 is attached thereto. In this example embodiment, the adapter 9 includes a plate-shaped structure 9A and a coupling pin 9B. The plate-shaped structure 9A is connected with the cutting target 5. The coupling pin 9B protrudes from the plate-shaped structure 9A. The coupling pin 9B is to be inserted into an insertion hole 50A (see FIG. 3) of a clamp 50 described below. The adapter 9 holds the cutting target 5.

As shown in FIG. 1, the cutting device 10 preferably is box shaped, for example. The cutting device 10 includes a case main body 12, a front top cover 20, and a front bottom cover 25. The case main body 12 is a housing of the cutting device 10. The case main body 12 is hollow. The case main body 12 includes a bottom wall 13, a left wall 14, a right wall 15, a rear wall 16, a top wall 17, a front wall 18 (see FIG. 2), a first inner bottom wall 13S (see FIG. 2), an inner right wall 15S (see FIG. 2), a first inner rear wall 16S (see FIG. 3), an inner top wall 17S (see FIG. 3), a second inner bottom wall 27 (see FIG. 3), and a second inner rear wall 28 (see FIG. 3). As shown in FIG. 3, the case main body 12 includes a processing chamber 19 therein. The processing chamber 19 is defined by a portion of the left wall 14, the first inner bottom wall 13S, the inner right wall 15S and the inner top wall 17S. The cutting target 5 (see FIG. 2) is cut in the processing chamber 19. As shown in FIG. 1, the left wall 14 extends upward from a left end of the bottom wall 13. The right wall 15 extends upward from a right end of the bottom wall 13. As shown in FIG. 3, the rear wall 16 extends upward from a rear end of the bottom wall 13. A left end of the rear wall 16 is connected with a rear end of the left wall 14 (see FIG. 1), and a right end of the rear wall 16 is connected with a rear end of the right wall 15. As shown in FIG. 2, the front wall 18 extends upward from a front end of the first inner bottom wall 13S. A left end of the front wall 18 is connected with a front end of the left wall 14, and a right end of the front wall 18 is connected with a front end of the right wall 15. A top end of the front wall 18 is connected with a front end of the top wall 17. As shown in FIG. 1, the top wall 17 is connected with top ends of the left wall 14, the right wall 15, the rear wall 16 and the front wall 18 (see FIG. 2).

As shown in FIG. 3, the first inner bottom wall 13S is located above the bottom wall 13. The first inner bottom wall 13S is gradually inclined downward and rearward. A lid 13L is located to the rear of the first inner bottom wall 13S. The lid 13L preferably is mesh-patterned so as to allow a liquid coolant to pass therethrough in the up-down direction. As shown in FIG. 2, the inner right wall 15S is located to the right of the left wall 14 and to the left of the right wall 15. The inner right wall 15S extends upward from the first inner bottom wall 13S. As shown in FIG. 3, the first inner rear wall 16S is located to the front of the rear wall 16 and to the rear of the front wall 18 (see FIG. 2). The first inner rear wall 16S is connected with the first inner bottom wall 13S, the left wall 14 (see FIG. 2), the inner right wall 15S (see FIG. 2) and the inner top wall 17S. The inner top wall 17S is located above the first inner bottom wall 13S and below the top wall 17.

The second inner bottom wall 27 is located below the first inner bottom wall 13S and above the bottom wall 13. The second inner bottom wall 27 extends parallel or substantially parallel to the bottom wall 13. The second inner bottom wall 27 has a liquid discharge opening 27H, running therethrough in the up-down direction, formed therein. The liquid discharge opening 27H is always open. The liquid discharge opening 27H is not provided with a valve or the like that is, for example, capable of switching the liquid discharge opening 27H into an open state or a closed state. Note that the liquid discharge opening 27H may be provided with a valve or the like that is, for example, capable of switching the liquid discharge opening 27H into an open state or a closed state. The second inner rear wall 28 is located to the front of the rear wall 16 and to the rear of the front wall 18. The second inner rear wall 28 is located below the first inner rear wall 16S. The second inner rear wall 28 extends parallel or substantially parallel to the rear wall 16. The second inner rear wall 28 extends upward from the bottom wall 13. A top end of the second inner rear wall 28 is connected with the second inner bottom wall 27.

As shown in FIG. 2, the case main body 12 includes an opening 18P in a side surface thereof (in this example embodiment, in the front wall 18). The opening 18P is defined by the left wall 14, the first inner bottom wall 13S, the inner right wall 15S and the inner top wall 17S. The opening 18P is provided in the processing chamber 19. An interior of the case main body 12 is divided into a left zone and a right zone by the inner right wall 15S. The processing chamber 19 is in the left zone of the case main body 12. In the right zone of the case main body 12, a first housing space A1 enclosed by the inner right wall 15S, the first inner bottom wall 13S, the right wall 15, the inner top wall 17S, the first inner rear wall 16S (see FIG. 3) and the front wall 18 is formed. Below the processing chamber 19, a second housing space A2 enclosed by the left wall 14, the bottom wall 13, the right wall 15, the second inner bottom wall 27 (see FIG. 3), the second inner rear wall 28 (see FIG. 3) and the front bottom cover 25 is provided. The second housing space A2 is always in communication with the processing chamber 19 through the liquid discharge opening 27H formed in the second inner bottom wall 27.

As shown in FIG. 3, the front top cover 20 is supported by a support arm 22. One end of the support arm 22 is attached to the case main body 12. The front top cover 20 moves in the up-down direction around a support shaft (not shown) of the support arm 22 to open or close the opening 18P. This switches the opening 18P of the case main body 12 to an open state or to a closed state. For putting or removing the cutting target 5 into or from the cutting device 10 or for performing, for example, maintenance of the cutting device 10, a user moves the front top cover 20 upward to open the opening 18P. As a result, the processing chamber 19 is put into communication with the outside of the cutting device 10. By contrast, for cutting the cutting target 5, the user moves the front top cover 20 downward to close the opening 18P. As a result, the processing chamber 19 is isolated from the outside of the cutting device 10.

As shown in FIG. 2, the front top cover 20 includes a window 21. The window 21 is formed of, for example, a transparent acrylic plate, glass plate or the like. The user is allowed to visually recognize the processing chamber 19 even in a state where the front cover 20 is closed, for example, at the time of cutting.

The front bottom cover 25 is provided to be slidable in the front-rear direction along support members (not shown) attached to the left wall 14 and the right wall 15. The front bottom cover 25 moves in the front-rear direction to switch the second housing space A2 to an open state or a closed state. For attaching or detaching a storage tank 70 containing the liquid coolant, the user moves the front bottom cover 25 forward. By contrast, for cutting the cutting target 5, the user slides the front bottom cover 25 rearward. This closes the second housing space A2.

As shown in FIG. 2 and FIG. 3, the cutting device 10 includes a carriage 38, a Y-axis direction moving mechanism 56, a Z-axis direction moving mechanism 57, a tool magazine 40, the clamp 50, an X-axis direction moving mechanism 58, the storage tank 70, and a controller 90. The Y-axis direction moving mechanism 56, the Z-axis direction moving mechanism 57 and the X-axis direction moving mechanism 58 are included in a moving mechanism 52 moving the clamp 50 and a grasping portion 32 described below relative to the cutting target 5. As shown in FIG. 2, the carriage 38 is located above the processing chamber 19. The carriage 38 has a spindle 30 and liquid injection nozzles 36 mounted thereon. As shown in FIG. 3, the spindle 30 extends through the inner top wall 17S in the Z-axis direction. The tool magazine 40 and the clamp 50 are located in the processing chamber 19. As shown in FIG. 2, the X-axis direction moving mechanism 58 is located in the first housing space A1. The storage tank 70 is detachably located in the second housing space A2.

The carriage 38 is movable in the Y-axis direction and the Z-axis direction. The carriage 38 includes a first carriage 38A and a second carriage 38B. The first carriage 38A is supported by a pair of first guide shafts 39A extending in the Y-axis direction. The first carriage 38A is moved in the Y-axis direction by the Y-axis direction moving mechanism 56 (see FIG. 3). There is no specific limitation on the configuration of the Y-axis direction moving mechanism 56. For example, the Y-axis direction moving mechanism 56 includes a motor, a feed screw mechanism and the like. Left ends of the first guide shafts 39A are connected with the left wall 14. The first guide shafts 39A extend through the inner right wall 15S, and right ends thereof are connected with the right wall 15. The second carriage 38B is supported by a pair of second guide shafts 39B extending in the Z-axis direction. The second carriage 38B is moved in the Z-axis direction by the Z-axis direction moving mechanism 57 (see FIG. 3). There is no specific limitation on the configuration of the Z-axis direction moving mechanism 57. For example, the Z-axis direction moving mechanism 57 includes a motor, a feed screw mechanism and the like, like the Y-axis direction moving mechanism 56. The second guide shafts 39B are provided on the first carriage 38A. Therefore, when the first carriage 38A moves in the Y-axis direction, the second carriage 38B also moves in the Y-axis direction. The Y-axis direction moving mechanism 56 and the Z-axis direction moving mechanism 57 are electrically connected with the controller 90 (see FIG. 1) and are controlled by the controller 90.

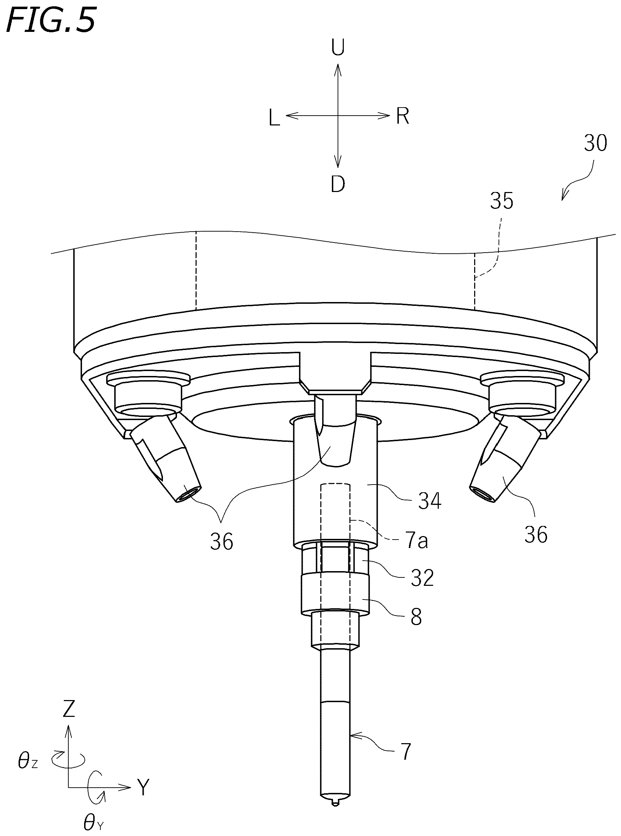

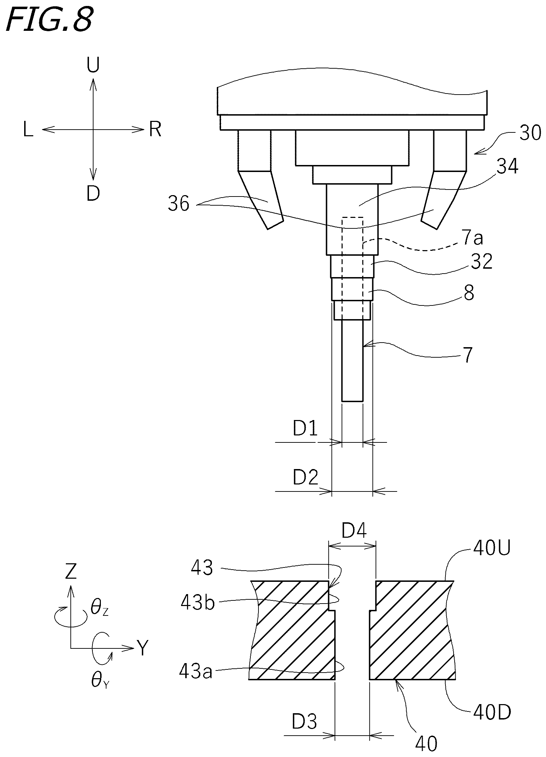

As shown in FIG. 2, the spindle 30 is provided on the second carriage 38B. The spindle 30 moves in the XYZ coordinate system along with the movement of the carriage 38. In more detail, the spindle 30 moves in the Z-axis direction along with the movement of the second carriage 38B and moves in the Y-axis direction along with the movement of the first carriage 38A. The spindle 30 supports a cutting tool 6 (also referred to as a "milling bar") or a dummy pin 7 such that the cutting tool 6 or the dummy pin 7 is rotatable. FIG. 2 shows a state where the spindle 30 supports the dummy pin 7. While grasping the cutting tool 6, the spindle 30 rotates the cutting tool 6 to cut the cutting target 5. Unlike the cutting tool 6, the dummy pin 7 is not used to cut the cutting target 5, and does not cut the cutting target 5. The dummy pin 7 is basically kept grasped by the spindle 30 except for while the spindle 30 grasps the cutting tool 6. The cutting tool 6 and the dummy pin 7 are each grasped by the spindle 30 such that axial directions thereof match the Z-axis direction. FIG. 5 is an enlarged view of a bottom end and the vicinity thereof the spindle 30. As shown in FIG. 5, the spindle 30 includes a grasping portion 32 (e.g., collet chuck), a rotation portion 34, and a seal portion 35 (see also FIG. 2). The seal portion 35 is formed to be cylindrical. The seal portion 35 extends in the up-down direction. The rotation portion 34 is provided at a bottom end of the seal portion 35. The rotation portion 34 rotates relative to the seal portion 35. The dummy pin 7 has a diameter D1 (see FIG. 8).

As shown in FIG. 2, the grasping portion 32 is provided at a bottom end of the rotation portion 34. The grasping portion 32 is located in the processing chamber 19. The grasping portion 32 rotates together with the rotation portion 34. The grasping portion 32 grasps either one of the cutting tool 6 or the dummy pin 7. The grasping portion 32 and the rotation portion 34 form a base portion of the spindle 30 supporting the cutting tool 6 or the dummy pin 7 such that the cutting tool 6 or the dummy pin 7 is rotatable. The grasping portion 32 supports (grasps) a top portion, of the cutting tool 6 or the dummy pin 7, in the Z-axis direction as the axial direction thereof. In this example embodiment, as shown in FIG. 5, the grasping portion 32 grasps a shank portion 7a, which is a top portion in the axial direction of the dummy pin 7. The shank portion 7a is a portion that is above a tool holder 8 described below in the Z-axis direction. When the first carriage 38A is moved in the Y-axis direction by the Y-axis direction moving mechanism 56 shown in FIG. 3, the grasping portion 32 of the spindle 30 moves in the Y-axis direction in the processing chamber 19. Similarly, when the second carriage 38B is moved in the Z-axis direction by the Z-axis direction moving mechanism 57, the grasping portion 32 of the spindle 30 moves in the Z-axis direction in the processing chamber 19. In this manner, the position of the grasping portion 32 relative to the cutting target 5 is changed by the Y-axis direction moving mechanism 56 and the Z-axis direction moving mechanism 57.

The rotation portion 34 rotates the cutting tool 6 or the dummy pin 7 supported by the grasping portion 32. The rotation portion 34 is located in the processing chamber 19. The rotation portion 34 is connected with a spindle motor 61. The rotation portion 34 and the spindle motor 61 define a rotation mechanism. The spindle motor 61 is electrically connected with the controller 90 and is controlled by the controller 90. The spindle motor 61 is driven to rotate the rotation portion 34 in the direction *θ_{Z}* around the Z-axis. Along with the rotation of the rotation portion 34, the cutting tool 6 or the dummy pin 7 rotates in the direction *θ*_{Z} around the Z-axis, together with the grasping portion 32 .

Now, as shown in FIG. 5, the dummy pin 7 is grasped in a state of having the tool holder 8 attached thereto. The tool holder 8 has a role of determining the position of the dummy pin 7 relative to the grasping portion 32 in order to attach the dummy pin 7 to the grasping portion 32 properly. The tool holder 8 is attached to a predetermined position, in the Z-axis direction, on the dummy pin 7. In this example embodiment, the tool holder 8 is attached at a substantially central position, in the Z-axis direction, on the dummy pin 7. The dummy pin 7 is inserted into the grasping portion 32 until a top surface of the tool holder 8 contacts the grasping portion 32. At this point, the shank portion 7a is inserted into, and grasped by, the grasping portion 32. The tool holder 8 is attached to an appropriate position, in the axial direction, of the dummy pin 7, so that the grasping portion 32 grasps the dummy pin 7 properly. When the rotation portion 34 rotates in the direction *θ_{Z}* around the Z-axis, the tool holder 8 rotates in the direction *θ*_{Z} around the Z-axis, together with the dummy pin 7. In this example embodiment, the tool holder 8 preferably has a configuration of a cylinder with steps. Note that there is no specific limitation on the shape of the tool holder 8. For example, the tool holder 8 may have a configuration of a cylinder with no steps or may be a retaining ring such as an E ring or the like. Similarly, in the case where the cutting tool 6 (see FIG. 2) is grasped by the grasping portion 32, the tool holder 8 is attached to the cutting tool 6. The tool holder 8 has a diameter D2 (see FIG. 8). In this example embodiment, the diameter of the tool holder 8 varies in accordance with the position in the Z-axis direction. In this example embodiment, diameter D2 is the longest diameter of the tool holder 8.

As shown in FIG. 5, the liquid injection nozzles 36 are provided on the spindle 30. The liquid injection nozzles 36 are located to the side of the rotation portion 34 of the spindle 30. When the carriage 38 is moved by the Y-axis direction moving mechanism 56 (see FIG. 3) and the Z-axis direction moving mechanism 57 (see FIG. 3), the liquid injection nozzles 36 move in the XYZ coordinate system, together with the spindle 30. Therefore, the position of the liquid injection nozzles 36 relative to the cutting target 5 (see FIG. 2) is changed by the Y-axis direction moving mechanism 56 and the Z-axis direction moving mechanism 57. In this example embodiment, for example, four liquid injection nozzles 36 in total are located to the front, to the rear, to the left and to the right of the rotation portion 34 (in FIG. 5, the liquid injection nozzle 36 located to the rear of the rotation portion 34 is not shown). Note that there is no specific limitation on the locations or the number of the liquid injection nozzles 36. As shown in FIG. 2, injection openings of the liquid injection nozzles 36 are located above the dummy pin 7 grasped by the grasping portion 32 (in the case where the cutting tool 6 is grasped by the grasping portion 32, above the cutting tool 6). The liquid injection nozzles 36 typically inject the liquid coolant toward the cutting tool 6 and/or the cutting target 5 grasped by the grasping portion 32. The liquid injection nozzles 36 are each an example of a liquid injection portion. As shown in FIG. 3, the liquid injection nozzles 36 are connected with a supply inlet path 70S of the storage tank 70 via a liquid supply path 36S. There is no specific limitation on the configuration of the liquid supply path 36S. For example, the liquid supply path 36S is an easily deformable tube formed of a resin. A liquid feeding pump 37 is located in the middle of the liquid supply path 36S. The liquid feeding pump 37 supplies the liquid injection nozzles 36 with the liquid coolant in the storage tank 70. The liquid feeding pump 37 is controlled by the controller 90. The liquid supply path 36S includes a first supply path 36SA connecting the liquid injection nozzles 36 and the liquid feeding pump 37 to each other, and a second supply path 36SB connecting the liquid feeding pump 37 and the supply inlet path 70S to each other. The first supply path 36SA extends through the first inner rear wall 16S and is connected with the liquid injection nozzles 36 via the spindle 30. The second supply path 36SB extends through the second inner rear wall 28. The second supply path 36SB is connectable with the supply inlet path 70S.

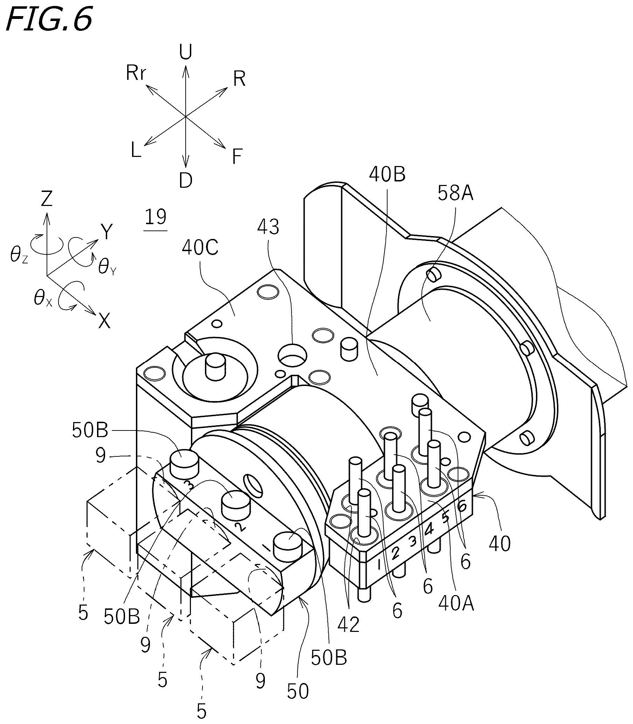

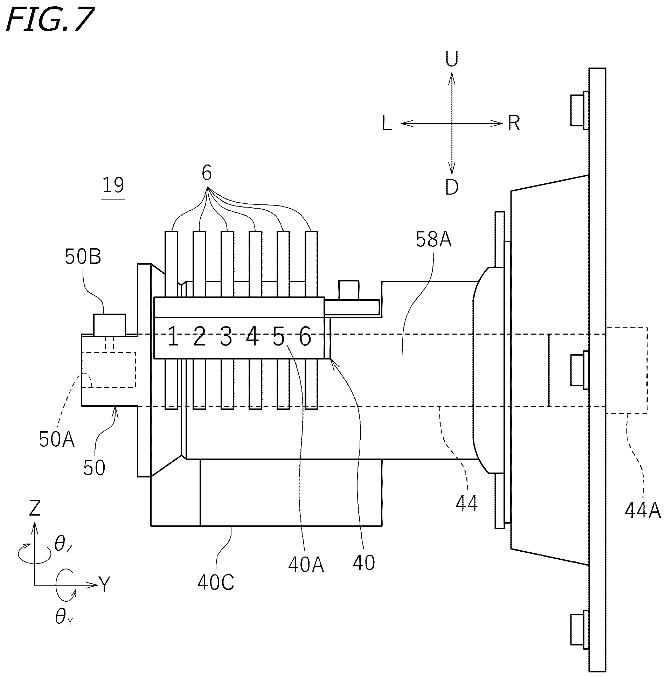

FIG. 6 is a perspective view of the tool magazine 40 and the clamp 50. FIG. 7 is a front view of the tool magazine 40 and the clamp 50. The tool magazine 40 is capable of housing a plurality of the cutting tools 6. The tool magazine 40 is provided between the clamp 50 and the X-axis direction moving mechanism 58 (see FIG. 2) and is located in the processing chamber 19. The tool magazine 40 and the clamp 50 are moved in the X-axis direction by the X-axis direction moving mechanism 58. As shown in FIG. 6, the tool magazine 40 includes a first portion 40A housing the cutting tools 6, a second portion 40B located to the rear of the first portion 40A and connected with a shaft 58A, and a third portion 40C located to the rear of the second portion 40B. The first portion 40A of the tool magazine 40 has a plurality of (for example, six in this example embodiment) tool housing holes 42, housing the cutting tools 6, formed therein. The cutting tools 6 are respectively inserted into the tool housing holes 42 with top portions thereof being exposed. For replacing the cutting tool 6, the cutting tool 6 grasped by the grasping portion 32 (see FIG. 5) of the spindle 30 (see FIG. 5) is returned to the corresponding tool housing hole 42. The spindle 30 is moved to a position above the cutting tool 6 to be used next, and a top end of the cutting tool 6 located below the grasping portion 32 is supported by the grasping portion 32. The third portion 40C of the tool magazine 40 has a dummy pin housing hole 43 formed therein. The dummy pin housing hole 43 is circular as seen in a plan view. The dummy pin 7 (see FIG. 2) is inserted into the dummy pin housing hole 43 with a top portion thereof being exposed. In the case where the dummy pin 7 is not used, the dummy pin 7 grasped by the grasping portion 32 of the spindle 30 is returned to the dummy pin housing hole 43. In this example embodiment, the dummy pin housing hole 43 is smaller than the tool housing holes 42 in the Z-axis direction. Note that the shape of the dummy pin housing hole 43 is not limited to this. The tool housing holes 42 and the dummy pin housing hole 43 are each an example of a housing hole.

FIG. 8 is a partially cut front view of the spindle 30 and the dummy pin housing hole 43. FIG. 8 shows a cross-section of the dummy pin housing hole 43. As shown in FIG. 8, the dummy pin housing hole 43 includes a first hole 43a having a diameter D3 and a second hole 43b having a diameter D4. The first hole 43a is an example of a first portion. The second hole 43b is an example of a second portion. The second hole 43b is connected with a top end of the first hole 43a. Dimension D3 as the diameter of the first hole 43a is slightly longer than dimension D1 as the diameter of the dummy pin 7 and is smaller than dimension D2 as the diameter of the tool holder 8. Therefore, the dummy pin 7 can be housed in a diametrically inner area of the first hole 43a, but the tool holder 8 cannot be housed in the diametrically inner area of the first hole 43a. Note that a portion of the tool holder 8 that has a diameter smaller than dimension D2 may be housed in the first hole 43a. Dimension D4 as the diameter of the second hole 43b is slightly longer than dimension D2 as the diameter of the tool holder 8. Therefore, the tool holder 8 can be housed in a diametrically inner area of the second hole 43b. The dummy pin housing hole 43 including the first portion 43a and the second portion 43b extends through the tool magazine 40 from a top surface 40U to a bottom surface 40D thereof in the Z-axis direction. Note that the dummy pin housing hole 43 does not need to extend through the tool magazine 40 in the Z-axis direction.

As shown in FIG. 7, a rotation shaft 44 supporting the clamp 50 such that the clamp 50 is rotatable is provided in the shaft 58A. The rotation shaft 44 extends in the left-right direction and is coupled with the clamp 50 and the X-axis direction moving mechanism 58 (see FIG. 2). A driving motor 44A is provided on the rotation shaft 44. The driving motor 44A is an example of a driving portion. The driving motor 44A is electrically connected with the controller 90 (see FIG. 1) and is controlled by the controller 90. The rotation shaft 44 is rotatable in the direction *θ* _{Y} around the Y-axis by the driving motor 44A. The rotation shaft 44 supports the clamp 50. Therefore, the driving motor 44A rotates the rotation shaft 44 in the direction *θ* _{Y} around the Y-axis to rotate the clamp 50 in the direction *θ* _{Y} around the Y-axis. The rotation shaft 44 is rotatable independently from the shaft 58A. That is, even when the rotation shaft 44 rotates in the direction *θ* _{Y} around the Y-axis, the shaft 58A does not rotate in the direction *θ* _{Y} around the Y-axis.

The X-axis direction moving mechanism 58 moves the tool magazine 40 and the clamp 50 in the X-axis direction in the processing chamber 19. As shown in FIG. 2, the X-axis direction moving mechanism 58 is located to the right of the tool magazine 40. The X-axis direction moving mechanism 58 includes the shaft 58A extending in the Y-axis direction. The shaft 58A extends through the inner right wall 15S. A portion of the shaft 58A (right portion) is located in the second housing space A2, and the other portion (left portion) of the shaft 58A is located in the processing chamber 19. The clamp 50 and the tool magazine 40 are provided on the left portion of the shaft 58A. There is no specific limitation on the configuration of the X-axis direction moving mechanism 58. For example, the X-axis direction moving mechanism 58 includes a motor, a feed screw mechanism and the like. The X-axis direction moving mechanism 58 is electrically connected with the controller 90 (see FIG. 1) and is controlled by the controller 90.

As shown in FIG. 6, the clamp 50 holds the adapter 9 such that the adapter 9 is detachable. In this example embodiment, the clamp 50 holds the cutting target 5, which is to be processed by the cutting tool 6, via the adapter 9. The clamp 50 is housed in the processing chamber 19. The clamp 50 is an example of a holder. In this example embodiment, the cutting target 5 is cut in a state of being held by the clamp 50 via the adapter 9. Note that the clamp 50 may be configured to directly hold the cutting target 5. The clamp 50 has a plurality of insertion holes 50A (see FIG. 7) formed therein. In this example embodiment, three insertion holes 50A are lined up in the front-rear direction, for example. The coupling pin 9B (see FIG. 4) of the adapter 9 is inserted into one of the insertion holes 50A. The coupling pin 9B inserted into the insertion hole 50A is secured to the clamp 50 by a screw 50B. The clamp 50 is movable in the X-axis direction by the X-axis direction moving mechanism 58, together with the tool magazine 40. Even when the clamp 50 rotates in the direction *θ* _{Y} around the Y-axis, the tool magazine 40 does not rotate in the direction *θ* _{Y} around the Y-axis.

As shown in FIG. 3, the storage tank 70 recovers the liquid coolant injected from the liquid injection nozzles 36. In this example embodiment, the liquid coolant injected from the liquid injection nozzles 36 passes through the liquid discharge opening 27H from the processing chamber 19 and flows into the second housing space A2. That is, the storage tank 70 recovers the liquid coolant via the liquid discharge opening 27H. The storage tank 70 is detachably located at a predetermined position in the second housing space A2. The storage tank 70 is located below the liquid discharge opening 27H. The storage tank 70 includes a storage case 72 and a supply inlet path 70S. The storage case 72 is formed to be shaped like a box with a top opening. Although not shown, a filter or the like separating cutting powder or the like mixed into the liquid coolant may be provided in the storage case 72. The supply inlet path 70S is provided to the rear of the storage case 72. The supply inlet path 70S extends in the front-rear direction. The supply inlet path 70S is connected with the second supply path 36SB of the liquid supply path 36S. The supply inlet path 70S supplies the liquid coolant in the storage case 72 to the liquid injection nozzles 36.

The controller 90 shown in FIG. 1 is, for example, a computer. The controller 90 may include, for example, a central processing unit (CPU) to execute a command of a control program, a ROM (read only memory) to store a program or the like to be executed by the CPU, a RAM (random access memory) used as a working area in which the program is developed, and a storage medium such as a memory or the like storing various types of data or the like. The controller 90 may be configured or programmed to, for example, perform controls regarding the cutting by use of the program stored on the ROM. In this example embodiment, the controller 90 is located in a rear area of the case main body 12. Note that a portion or an entirety of the controller 90 may be provided outside of the case main body 12.

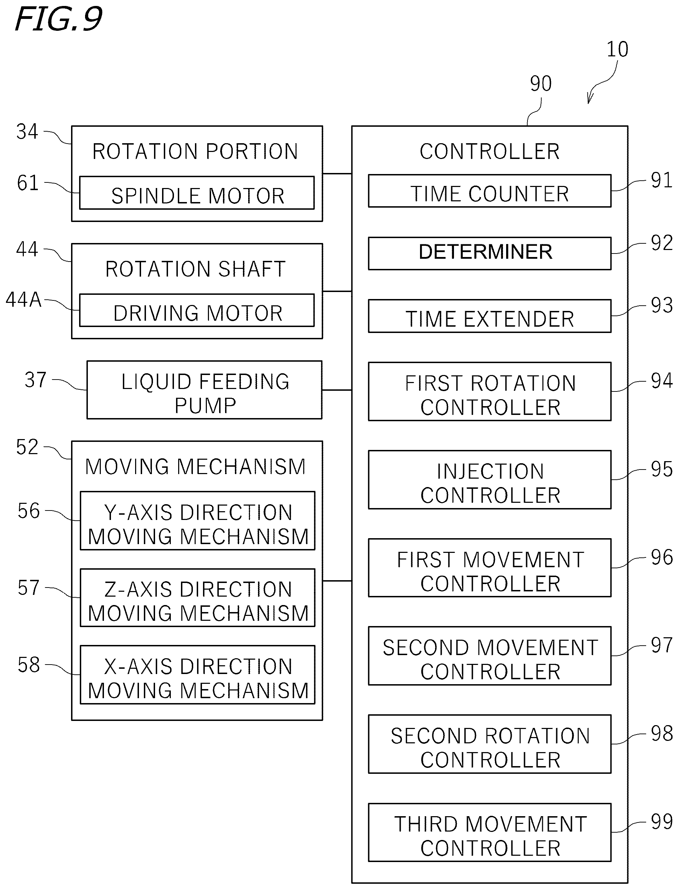

FIG. 9 is a block diagram of the cutting device 10. As shown in FIG. 9, the controller 90 is connected with the spindle motor 61, the driving motor 44A, the liquid feeding pump 37, the Y-axis direction moving mechanism 56, the Z-axis direction moving mechanism 57, and the X-axis direction moving mechanism 58, and is configured or programmed to control operations of these elements. The controller 90 is configured or programmed to include a time counter 91, a determiner 92, a time extender 93, a first rotation controller 94, an injection controller 95, a first movement controller 96, a second movement controller 97, a second rotation controller 98, and a third movement controller 99. Each of the elements 91 through 99 of the controller 90 may be software or hardware. For example, each of the elements 91 through 99 of the controller 90 may include one or a plurality of processors, or may be incorporated into a circuit. The control provided by each of the elements 91 through 99 of the controller 90 will be described below.

Now, while the cutting target 5 is being cut by the cutting device 10, the liquid coolant is injected from the liquid injection nozzles 36. If the cutting target 5 is cut in a state where the liquid coolant is injected, the liquid coolant having the cutting powder of the cutting target 5 mixed therein is splattered in, and adheres to, the interior of the processing chamber 19. When the cutting of the cutting target 5 is finished and a certain time period elapses, the splattered liquid coolant is dried, and the material of the cutting target 5 is deposited and fixed. Alternatively, a substance contained in the liquid coolant (e.g., magnesium, calcium or the like dissolved in water contained in the liquid coolant) is deposited and fixed. If, for example, the material of the cutting target 5 or the substance contained in the liquid coolant is fixed to a component such as the rotation portion 34, the shaft 58A or the like, such a component may possibly be prevented from, for example, rotating. If the material of the cutting target 5 or the substance contained in the liquid coolant is fixed to the interior of the processing chamber 19 or the components located in the processing chamber 19, the cutting tool 6 (dummy pin 7) and the clamp 50 may possibly be prevented from being moved by the Y-axis direction moving mechanism 56, the Z-axis direction moving mechanism 57 or the X-axis direction moving mechanism 58.

The present inventors have considered that if the liquid coolant attached to the interior of the processing chamber 19 is prevented from drying, the material of the cutting target 5 or the substance contained in the liquid coolant is prevented from being deposited. Therefore, in this example embodiment, the liquid coolant is injected toward the interior of the processing chamber 19 at a predetermined time interval, aside from the time of cutting, and thus the material of the cutting target 5 or the substance contained in the liquid coolant is prevented from being deposited. In the following description, the operation of injecting the liquid coolant toward the interior of the processing chamber 19, aside from the time of cutting, will be referred to as "flushing".

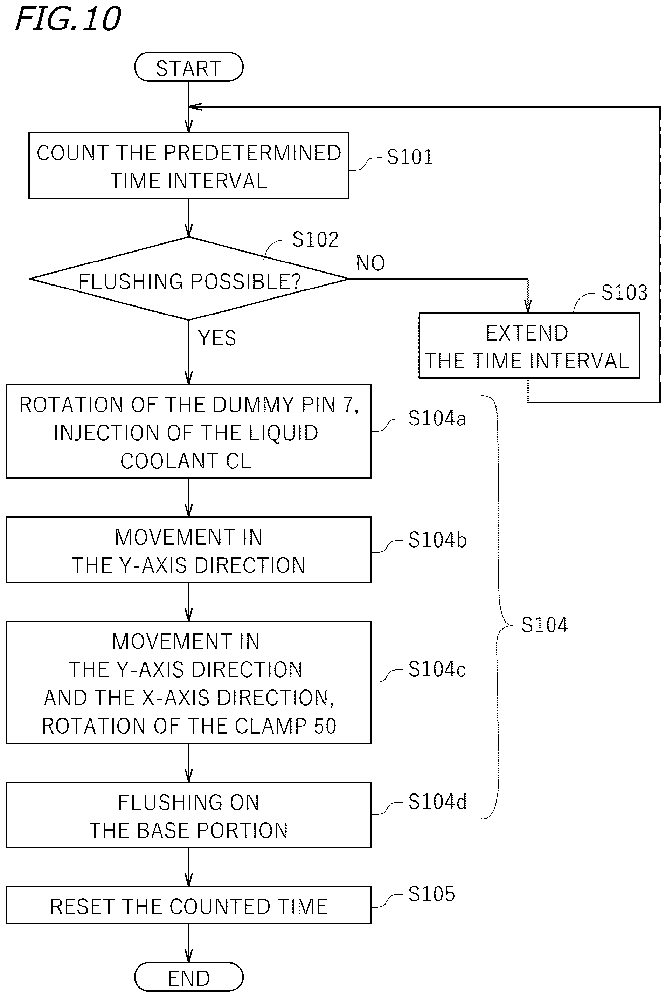

FIG. 10 is a flowchart showing a procedure of flushing performed periodically. The procedure will be described with reference to the flowchart shown in FIG. 10, together with the detailed descriptions of the elements 91 through 99 (see FIG. 9) of the controller 90. In the following description, as shown in FIG. 2, it is assumed that the dummy pin 7 (see FIG. 2) is grasped by the grasping portion 32 (see FIG. 2).

In step S101 shown in FIG. 10, the time counter 91 (see FIG. 9) counts time for a predetermined time interval. In this example embodiment, the predetermined time interval is 12 hours. Note that the predetermined time interval is not limited to this. The predetermined time interval may be, for example, preset by the user. The time counter 91 counts the time while the cutting device 10 is ON. For example, even if the cutting target 5 is cut during the predetermined time interval, the time counter 91 keeps on counting. When the time counted by the time counter 91 reaches the predetermined time interval (in this example embodiment, when the time interval of 12 hours has elapsed), the procedure advances to step S102. Step S101 is an example of a time counting step.

In step S102, the determiner 92 (see FIG. 9) determines whether or not it is possible for the cutting device 10 to start the injection of the liquid coolant by the liquid injection nozzles 36. That is, it is determined whether or not the cutting device 10 is in a state of being capable of performing the flushing. A condition for the determination by the determiner 92 is, for example, predetermined by the user. A state where the cutting device 10 is capable of performing the flushing is a state that is relatively safe for the user. For example, a state where the opening 18P is closed by the front top cover 20 shown in FIG. 2, a state where the rotation portion 34 of the spindle 30 is not rotating, or the like. A state where the cutting device 10 is cutting the cutting target 5 is not a state where the cutting device 10 is capable of performing the flushing. Note that the condition for the determination by the determiner 92 is not limited to those mentioned above. There may be one condition or a combination of a plurality of conditions for the determination by the determiner 92. The cutting device 10 may include a sensor detecting the temperature, the pressure or the like, and may be configured such that the result detected by the sensor is used for the determination by the determiner 92. When it is determined in step S102 shown in FIG. 10 that the cutting device 10 is not in a state of being capable of performing the flushing, the procedure advances to step S103. When it is determined in step S102 that the cutting device 10 is in a state of being capable of performing the flushing, the procedure advances to step S104.

In step S103, the time extender 93 (see FIG. 9) extends the predetermined time interval. In this example embodiment, the time extender 93 extends the predetermined time interval by 30 minutes, for example. As described above, in this example embodiment, the predetermined time interval is 12 hours, for example. Therefore, the extension of the time interval by the time extender 92 results in the predetermined time interval being 12 hours and 30 minutes, for example. When the time extender 93 extends the time interval, the procedure returns to step S101. When the time extender 93 extends the time interval in this manner, the time counter 91 counts the time for the time interval of 12 hours and 30 minutes (i.e., 30 minutes after the first performance of step S101). When the time counted by the time counter 91 reaches 12 hours 30 minutes, the determination is performed again by the determiner 92 (step S102). If it is determined that the processing device 10 is not in a state of being capable of performing the flushing when the extended time interval elapses, the time extender 93 extends the time interval again. There is no specific limitation on the amount of time interval to which the time extender 93 extends. In the case there the time extender 93 extends the predetermined time interval twice or more, the time interval does not need to be extended by an equal amount of time.

In step S104, the cutting device 10 performs the flushing. At this point, the spindle 30 is moved in advance by the Y-axis direction moving mechanism 56 and the Z-axis direction moving mechanism 57 (see FIG. 3) such that the dummy pin 7 shown in FIG. 2 is located above, and to the left of, the tool magazine 40 and the clamp 50. Step S104 includes steps S104a, S104b, S104c and S104d. Step S104 is an example of an injection step.

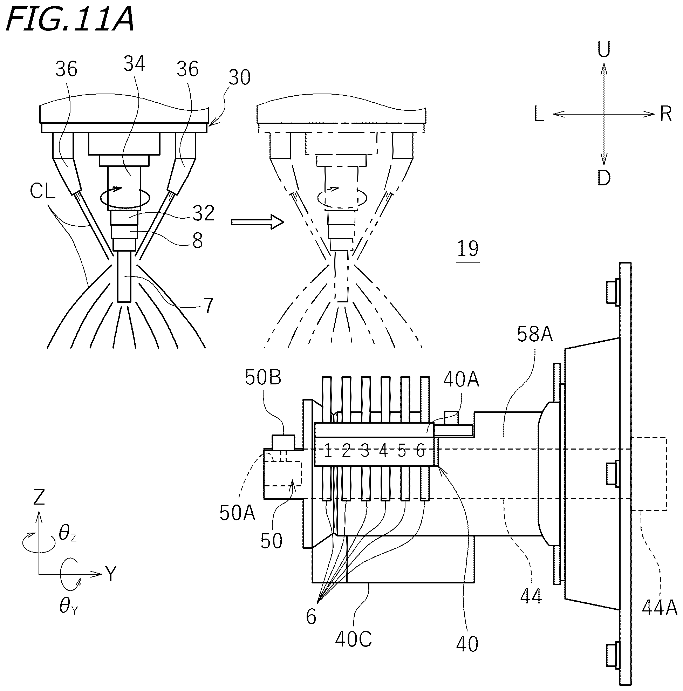

In step S104a (see FIG. 10), the first rotation controller 94 shown in FIG. 9 drives the spindle motor 61. As a result, the rotation portion 34 rotates and the dummy pin 7 (see FIG. 5) rotates around an axis thereof. While the dummy pin 7 is rotating, the injection controller 95 drives the liquid feeding pump 37 to cause the liquid coolant to be injected from the liquid injection nozzles 36 toward the dummy pin 7. FIG. 11A is a front view of the rotation portion 34 and the vicinity thereof while the liquid coolant is being injected. As shown in FIG. 11A, the liquid coolant (represented by "CL" in FIG. 11A through FIG. 11C) is injected from the liquid injection nozzles 36 toward the dummy pin 7, which is rotating. The injected liquid coolant CL collides against the rotating dummy pin 7, and thus spreads in a diametrical direction of the dummy pin 7 and is splattered downward. At this point, the liquid coolant CL splashes on the interior of the processing chamber 19. In this example embodiment, the liquid coolant CL is injected toward the rotating dummy pin 7 also in steps S104b and S104c described below.

In step S104b shown in FIG. 10, the first movement controller 96 (see FIG. 9) causes the Y-axis direction moving mechanism 56 (see FIG. 9) to move the spindle 30 and the liquid injection nozzles 36 (see FIG. 11A) in the Y-axis direction in the processing chamber 19 (see FIG. 11A). In this example embodiment, the spindle 30 and the liquid injection nozzles 36 are moved rightward until the dummy pin 7 is located substantially just above the clamp 50 as shown in FIG. 11A. While the liquid injection nozzles 36 are being moved under the control of the first movement controller 96, the injection controller 95 (see FIG. 9) causes the liquid coolant CL to be injected from the liquid injection nozzles 36. The liquid coolant CL is injected while the liquid injection nozzles 36 are moving, and therefore, the range in which the liquid coolant CL is splattered as from a shower is moved in the Y-axis direction. At this point, the liquid coolant CL splashes on the tool magazine 40, the clamp 50 and the interior of the processing chamber 19. There is no specific limitation on the distance or the speed by which the first movement controller 96 causes the first carriage 38 to move. In FIG. 11A, an arrow is provided to show that the spindle 30 and the liquid injection nozzles 36 move rightward. Alternatively, the spindle 30 and the liquid injection nozzles 36 may move leftward.

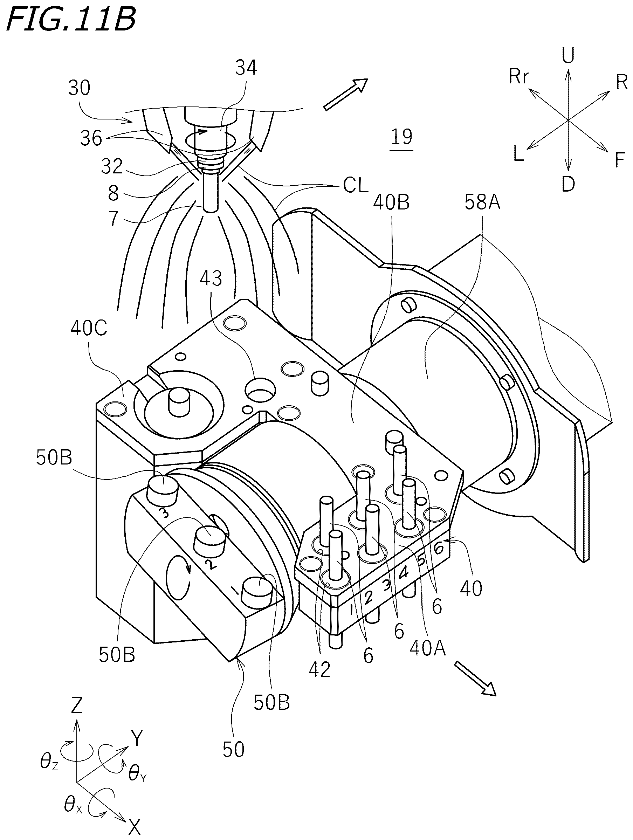

In step S104c (see FIG. 10), the first movement controller 96 (see FIG. 9) causes the spindle 30 and the liquid injection nozzles 36 to move in the processing chamber 19 further rightward. The second movement controller 97 (see FIG. 9) causes the X-axis direction moving mechanism 58 (see FIG. 9) to move the tool magazine 40 and the clamp 50 in the X-axis direction in the processing chamber 19. The second rotation controller 98 (see FIG. 9) controls the driving motor 44A to rotate the clamp 50 in the direction *θ* _{Y} around the Y-axis. In this example embodiment, while the spindle 30 and the liquid injection nozzles 36 are being moved under the control of the first movement controller 96, the clamp 50 is being moved under the control of the second movement controller 97 and the clamp 50 is being rotated under the control of the second rotation controller 98, the injection controller 95 (see FIG. 9) causes the liquid coolant CL to be injected from the liquid injection nozzles 36. FIG. 11B is a schematic view showing a state where the spindle 30, the liquid injection nozzles 36, the tool magazine 40 and the clamp 50 are being moved and the clamp 50 is being rotated. As shown in FIG. 11B, the liquid coolant CL is injected while the spindle 30 and the liquid injection nozzles 36 are being moved in the Y-axis direction, and therefore, the liquid coolant CL is attached to the tool magazine 40 and the clamp 50 along the Y-axis direction. The liquid coolant CL is injected while the tool magazine 40 and the clamp 50 are being moved in the X-axis direction, and therefore, the liquid coolant CL is attached to the tool magazine 40 and the clamp 50 along the X-axis direction. In addition, the liquid coolant CL is injected while the clamp 50 is being rotated in the direction *θ* _{Y} around the Y-axis, and therefore, the liquid coolant CL splashed on a surface, of the clamp 50, that is along the direction *θ* _{Y} around the Y-axis. In step S104b, the splattered liquid coolant CL is also attached to the interior of the processing chamber 19. There is no specific limitation on the distance or the speed by which the spindle 30 and the liquid injection nozzles 36 are moved under the control of the first movement controller 96, or the distance or the speed by which the tool magazine 40 and the clamp 50 are moved under the control of the second movement controller 97. There is no specific limitation either on the amount or the speed by which the clamp 50 is rotated under the control of the second rotation controller 98. In FIG. 11B, an arrow is provided to show that the spindle 30 and the liquid injection nozzles 36 move rightward. Alternatively, the spindle 30 and the liquid injection nozzles 36 may move leftward. In FIG. 11B, an arrow is provided to show that the tool magazine 40 and the clamp 50 move forward. Alternatively, the tool magazine 40 and the clamp 50 may move rearward. In FIG. 11B, the clamp 50 rotates clockwise as seen from the left. Alternatively, the clamp 50 may rotate counterclockwise.

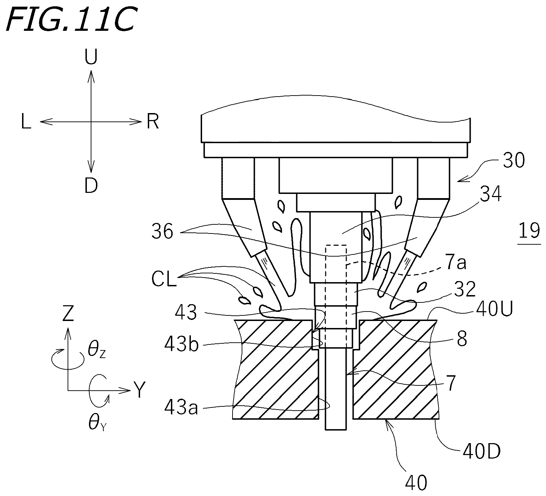

In step S104d (see FIG. 10), the third movement controller 99 (see FIG. 9) causes the Y-axis direction moving mechanism 56 (see FIG. 9) and the Z-axis direction moving mechanism 57 (see FIG. 9) to move the grasping portion 32 in the processing chamber 19 such that at least a portion of the dummy pin 7 is housed in the first hole 43a (see FIG. 11C) of the dummy pin housing hole 43 and at least a portion of the tool holder 8 is housed in the second hole 43b (see FIG. 11C). In this example embodiment, the third movement controller 99 also causes the X-axis direction moving mechanism 58 to move the tool magazine 40. Before causing the grasping portion 32 to move, the third movement controller 99 stops the rotation of the rotation portion 34. In a state where at least a portion of the dummy pin 7 is located in the dummy pin housing hole 43 under the control of the third movement controller 99, the injection controller 95 (see FIG. 9) causes the liquid coolant CL to be injected toward the dummy pin 7 from the liquid injection nozzles 36. FIG. 11C is a partially cut front view of the dummy pin 7 and the vicinity thereof in a state where the grasping portion 32 is moved under the control of the third movement controller 99. FIG. 11 shows a cross-section of the tool magazine 40. As shown in FIG. 11C, at least a portion of the dummy pin 7 is housed in the first hole 43a of the dummy pin housing hole 43 and at least a portion of the tool holder 8 is housed in the second hole 43b. At this point, a portion of a diametrically inner area of the second hole 43b is closed by the tool holder 8. A portion of the dummy pin 7 is housed in the first hole 43a of the dummy pin housing hole 43. Therefore, when the liquid coolant CL is injected toward the dummy pin 7 from the liquid injection nozzles 36, a portion of the liquid coolant CL splashes on the top surface 40U of the tool magazine 40 and is bounced back upward. The liquid coolant CL thus bounced back splashes on the grasping portion 32 and the rotation portion 34. That is, the liquid coolant CL splashes on the base portion of the spindle 30. In the case where a gap between an outer circumferential surface of the dummy pin 7 and an inner circumferential surface of the first hole 43a is relatively large and a gap between an outer circumferential surface of the tool holder 8 and an inner circumferential surface of the second hole 43b is relatively large, the dummy pin 7 and the tool holder 8 may be rotating around axes thereof when being put in the first hole 43a and the second hole 43b respectively.

There is no specific limitation on the order in which steps S104a through S104d (FIG. 10) included in step S104 are performed. For example, step S104d may be performed before step S104a. Steps S104a through S104d included in step S104 may be performed a plurality of times. For example, after step S104d is performed, steps S104a through S104c may be performed, and then step S104d may be performed again.

As described above, there is no specific limitation on the distance by which each of the spindle 30, the liquid injection nozzles 36, the tool magazine 40 and the clamp 50 is moved in step S104. There is no specific limitation on the amount by which the clamp 50 is rotated in step S104c. Note that from the point of view of attaching the liquid coolant CL to a larger area of the interior of the processing chamber 19, the tool magazine 40 and the clamp 50, it is preferred in step S104 that the spindle 30 and the liquid injection nozzles 36 are moved in the entirety of a movable range of the spindle 30 and the liquid injection nozzles 36 from a left end to a right end thereof in the Y-axis direction. Similarly, it is preferred that the tool magazine 40 and the clamp 50 are moved in the entirety of a movable range of the tool magazine 40 and the clamp 50 from a rear end to a front end thereof in the X-axis direction. Also similarly, it is preferred that the clamp 50 is rotated by one rotation or more in the direction *θ* _{Y} around the Y-axis direction. In step S104, the spindle 30 and the liquid injection nozzles 36 may be moved in the Z-axis direction by the Z-axis direction moving mechanism 57.

In step S105 shown in FIG. 10, the time counter 91 (see FIG. 9) resets the time counted. When the counted time is reset, the procedure in the flowchart shown in FIG. 10 is finished. After the procedure in the flowchart is finished, the time counter 91 starts counting the time again, and the flow is started from step S101. In this manner, the flushing is performed at each predetermined time interval.

As described above, with the cutting device 10 according to this example embodiment, when the time counted by the time counter 91 reaches the predetermined time interval (in this example embodiment, 12 hours, for example), the injection controller 95 causes the liquid coolant CL to be injected. The liquid coolant CL is injected toward the interior of the processing chamber 19 periodically, and therefore, a state where the interior of the processing chamber 19 is wet with the liquid coolant CL is kept. That is, drying of the liquid coolant CL attached to the interior of the processing chamber 19 is reduced or prevented. This reduces or prevents deposition or fixation of the material of the cutting target 5 or the substance contained in the liquid coolant CL on the interior of the processing chamber 19 or on the grasping portion 32, the tool magazine 40, the clamp 50 or the like located in the processing chamber 19. Therefore, occurrence a defect during the movement of the cutting target 5 or the grasping portion 32 by the moving mechanism 52 is reduced or prevented.

When the cutting device 10 cuts the cutting target 5, the cutting powder of the cutting target 5 is scattered and may possibly be attached to the interior of the processing chamber 19. In this example embodiment, the liquid coolant CL is injected periodically, so that the cutting powder attached to the interior of the processing chamber 19 is washed away.

With the cutting device 10 according to this example embodiment, the injection controller 95 causes the liquid coolant CL to be injected while the dummy pin 7 is being rotated under the control of the first rotation controller 94. As shown in FIG. 11A, the liquid coolant CL colliding against the rotating dummy pin 7 spreads in the diametrical direction of the dummy pin 7 and is splattered downward. As a result, the liquid coolant CL splashes on a larger area of the interior of the processing chamber 19. Therefore, the drying of the liquid coolant CL attached to the interior of the processing chamber 19 is reduced or prevented more preferably.

With the cutting device 10 according to this example embodiment, the injection controller 95 causes the liquid coolant CL to be injected from the liquid injection nozzles 36 while the liquid injection nozzles 36 are being moved under the control of the first movement controller 96. As a result, as shown in FIG. 11A, the liquid coolant CL splashes on a larger area of the interior of the processing chamber 19. Therefore, the drying of the liquid coolant CL attached to the interior of the processing chamber 19 is reduced or prevented more preferably.

With the cutting device 10 according to this example embodiment, the injection controller 95 causes the liquid coolant CL to be injected from the liquid injection nozzles 36 while the liquid injection nozzles 36 are being moved under the control of the second movement controller 97. In addition, the injection controller 95 causes the liquid coolant CL to be injected from the liquid injection nozzles 36 while the clamp 50 is being rotated under the control of the second rotation controller 98. As a result, the liquid coolant CL splashes on a larger area of the clamp 50. Therefore, the drying of the liquid coolant CL attached to the clamp 50 is reduced or prevented more preferably.

With the cutting device 10 according to this example embodiment, the injection controller 95 causes the liquid coolant CL to be injected toward the dummy pin 7 in a state where at least a portion of the dummy pin 7 is housed in the dummy pin housing hole 43 under the control of the third movement controller 99. At this point, as shown in FIG. 11C, a portion of the liquid coolant CL collides against the top surface 40U of the tool magazine 40 and is bounced back upward. As a result, the liquid coolant CL splashes on the grasping portion 32 and the rotation portion 34. Therefore, the drying of the liquid coolant CL attached to the grasping portion 32 and the rotation portion 34 is reduced or prevented more preferably.

With the cutting device 10 according to this example embodiment, the third movement controller 99 causes the grasping portion 32 to be moved such that at least a portion of the dummy pin 7 is housed in the first hole 43a of the dummy pin housing hole 43 and at least a portion of the tool holder 8 is housed in the second hole 43b. A portion of a diametrically inner area of the second hole 43b is closed by the tool holder 8, and therefore, the amount of the liquid coolant CL passing through the second hole 43b and flowing downward is relatively small. Therefore, a larger amount of the liquid coolant CL is bounced back upward. In addition, the dummy pin housing hole 43, the grasping portion 32 and the rotation portion 34 are relatively close to each other in the Z-axis direction. Therefore, the liquid coolant CL bounced back by the top surface 40U of the tool magazine 40 easily splashes on the grasping portion 32 and the rotation portion 34. Thus, the drying of the liquid coolant CL attached to the grasping portion 32 and the rotation portion 34 is reduced or prevented more preferably. The second hole 43b is positioned above the first hole 43a. Therefore, when the liquid coolant CL is injected toward the dummy pin 7 in a state where at least a portion of the dummy pin 7 is housed in the first hole 43a and at least a portion of the tool holder 8 is housed in the second hole 43b, the liquid coolant CL directed toward the dummy pin 7 splashes on the tool holder 8. Thus, the drying of the liquid coolant CL attached to the tool holder 8 is also reduced or prevented.

With the cutting device 10 according to this example embodiment, the dummy pin housing hole 43 is provided in the tool magazine 40. Therefore, the dummy pin housing hole 43 provided in the tool magazine 40 is usable to cause the liquid coolant CL to splash on the grasping portion 32 and the rotation portion 34. This makes it unnecessary to additionally provide a housing hole used for the flushing. Thus, increase in the number of components of the cutting device 10 is reduced or prevented.

With the cutting device 10 according to this example embodiment, when the determiner 92 determines that the cutting device 10 is not in a state of being capable of performing the flushing, the time extender 93 extends the predetermined time interval for the flushing. When the extended time interval elapses, the flushing is performed. Therefore, the flushing is performed as long as the cutting device 10 is in a state of being capable of performing the flushing when the extended time interval elapses, even though the flushing is not performed when the original predetermined time interval elapses. For example, there is a case where the user replaces the cutting tool 6 and wishes to cut the cutting target 5 immediately. Now, it is assumed that the predetermined time interval elapses when the user opens the front top cover 20 (see FIG. 2) (a state where it is impossible to perform the flushing) and replaces the cutting tool 6. If the predetermined time interval is not extended by the time extender 93 in such a case, the flushing starts immediately when the flushing is made possible. In this case, the cutting target 5 cannot be cut. According to this example embodiment, the predetermined time interval is extended by the time extender 93, so that the convenience for the user is improved. In addition, there may be a case where the time at which the predetermined time interval elapses is approaching when the user is working with the front top cover 20 being opened. Even in such a case, the user does not need to stop the work in the middle. Even if the predetermined time interval elapses during the work, the flushing is performed after the extended time interval elapses. The user does not need to put the cutting device 10 into a state of being capable of performing the flushing even when the time at which the predetermined time interval elapses approaches. This improves the convenience for the user.

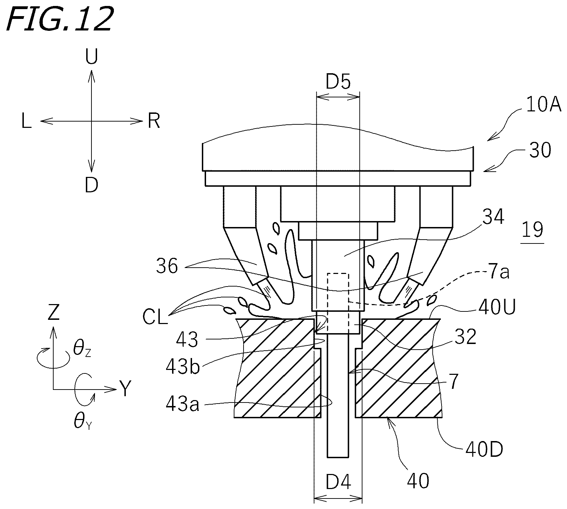

Now, a cutting device 10A (see FIG. 12) according to another example embodiment will be described. FIG. 12 is a view, corresponding to FIG. 11C, of the cutting device 10A according to the another example embodiment. In the following description, substantially the same elements or components as those described above will bear the same reference signs, and descriptions thereof will be omitted as appropriate.

As shown in FIG. 12, in the cutting device 10A, the tool holder 8 (see FIG. 11C) is not attached to the dummy pin 7. The grasping portion 32 has a diameter D5. Dimension D4 as the diameter of the second hole 43b of the dummy pin housing hole 43 is slightly longer than dimension D5. The third movement controller 99 (see FIG. 9) causes the grasping portion 32 to be moved in the processing chamber 19 such that at least a portion of the dummy pin 7 is housed in the first hole 43a and at least a portion of the grasping portion 32 is housed in the second hole 43b.

With the cutting device 10A according to the another example embodiment, a portion of a diametrically inner area of the second hole 43b is closed by the grasping portion 32. Therefore, the amount of the liquid coolant CL passing through the second hole 43b and flowing downward is relatively small. Thus, like in the above-described example embodiment, a larger amount of the liquid coolant CL is bounced back upward. In addition, the dummy pin housing hole 43 and the rotation portion 34 are relatively close to each other in the Z-axis direction. Therefore, the liquid coolant CL bounced back by the top surface 40U of the tool magazine 40 easily splashes on the rotation portion 34. The grasping portion 32 is housed in the second hole 43b, and therefore, the liquid coolant CL injected toward the dummy pin 7 splashes on the grasping portion 32. Thus, like in the above-described example embodiment, the drying of the liquid coolant CL attached to the grasping portion 32 and the rotation portion 34 is reduced or prevented. This is also applicable to the case where the cutting tool 6 (see FIG. 2) is used instead of the dummy pin 7.

Example embodiments of the present invention are described above. The above-described example embodiments are merely examples, and the present invention may be realized in any of various other example embodiments.

In each of the above-described example embodiments, the dummy pin 7 is grasped by the grasping portion 32 while the flushing is being performed. The present invention is not limited to this. The cutting tool 6 may be grasped by the grasping portion 32 while the flushing is being performed. In the case where the cutting tool 6 is used for the flushing, the tool housing hole 42 may be used instead of the dummy pin housing hole 43.

In each of the above-described example embodiments, in step S104b, the movement of the spindle 30 and the liquid injection nozzles 36 in the Y-axis direction, the movement of the tool magazine 40 and the clamp 50 in the X-axis direction, and the rotation of the clamp 50 in the direction *θ* _{Y} around the Y-axis are performed concurrently. These movements/rotation do not need to be performed concurrently. For example, the movement of the spindle 30 and the liquid injection nozzles 36 in the Y-axis direction, the movement of the tool magazine 40 and the clamp 50 in the X-axis direction, and the rotation of the clamp 50 in the direction *θ* _{Y} around the Y-axis may be performed at different times. Either two of the above-mentioned movements/rotation may be performed concurrently.

In each of the above-described example embodiments, step S104 includes steps S104a through S104d. Alternatively, in step S104, a portion of steps S104a through S104d may be performed. Note that from the point of view of attaching the liquid coolant CL to a larger area of the interior of the processing chamber 19, it is preferred that all the steps S104a through S104d are performed.

In each of the above-described example embodiments, as shown in FIG. 11C, the dummy pin housing hole 43 includes the first hole 43a and the second hole 43b having different diameters from each other. The present invention is not limited to this. For example, the first hole 43a may extend through the tool magazine 40 from the top surface 40U to the bottom surface 40D thereof in the Z-axis direction. In such a case, a portion of a diametrically inner area of the first hole 43a is closed by the dummy pin 7. Therefore, the amount of the liquid coolant CL passing through the first hole 43a and flowing downward is made relatively small. Thus, like in the above-described example embodiments, a larger amount of the liquid coolant CL is bounced back upward.

Unless otherwise specified, the above-described example embodiments do not limit the present invention. For example, the cutting device does not need to be a cutting device for dental use that is used to produce a molded item for dental use. The cutting target does not need to be held by the cutting device via the adapter, and may be directly held by cutting device.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing example embodiments of the principles of the present invention. These example embodiments are provided with the understanding that they are not intended to limit the present invention to the example embodiments described in the specification and/or shown in the drawings. The present invention encompasses any of example embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the example embodiments described in this specification or used during the prosecution of the present application.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A cutting device (10), comprising:
a holder (50) to hold a cutting target (5);
a processing chamber (19) housing the holder (50) while the cutting target (5) is processed in the processing chamber (19);
a grasping portion (32) to selectively grasp either one of a cutting tool (6) to cut the cutting target (5) or a dummy pin (7) that does not cut the cutting target (5), the grasping portion (32) being located in the processing chamber (19);
a moving mechanism (52) to move at least one of the holder (50) or the grasping portion (32) relative to the cutting target (5);
a liquid injection portion (36) to inject a liquid coolant (CL) toward an interior of the processing chamber (19); and
a controller (90) configured or programmed to control the liquid injection portion (36) and include:
a time counter (91) configured or programmed to count time for a predetermined time interval; and
an injection controller (95) configured or programmed to cause the liquid injection portion (36) to inject the liquid coolant (CL) toward the interior of the processing chamber (19) when the time counted by the time counter reaches a predetermined time interval.

2. The cutting device (10) according to claim 1, further comprising a rotation mechanism (34,61) to rotate the grasping portion (32) around an axis of the cutting tool (6) or the dummy pin (7) grasped by the grasping portion (32); wherein
the controller (90) is configured or programmed to include a first rotation controller (94) configured or programmed to cause the rotation mechanism (34) to rotate the grasping portion (32) around the axis; and
the injection controller (95) is configured or programmed to cause the liquid coolant (CL) to be injected toward the cutting tool (6) or the dummy pin (7) while the cutting tool (6) or the dummy pin (7) is being rotated under the control of the first rotation controller (94).

3. The cutting device (10) according to claim 1 or 2, wherein
the moving mechanism (52) is configured to move the liquid injection portion (36) relative to the cutting target (5);
the controller (90) is configured or programmed to include a first movement controller (96) configured or programmed to cause the moving mechanism (52) to move the liquid injection portion (36) in the processing chamber (19); and
the injection controller (95) is configured or programmed to cause the liquid coolant (CL) to be injected while the liquid injection portion (36) is being moved under the control of the first movement controller (96).

4. The cutting device (10) according to any one of claims 1 through 3, wherein
the controller (90) is configured or programmed to includes a second movement controller (97) configured or programmed to cause the moving mechanism (52) to move the holder (50) in the processing chamber (19); and
the injection controller (95) is configured or programmed to cause the liquid coolant (CL) to be injected while the holder (50) is being moved under the control of the second movement controller (97).

5. The cutting device (10) according to any one of claims 1 through 4, further comprising:
a rotation shaft (44) supporting the holder (50) such that the holder (50) is rotatable; and
a driving portion (44A) rotating the holder (50) around the rotation shaft (44); wherein
the controller (90) is configured or programmed to include a second rotation controller (98) configured or programmed to control the driving portion (44A) to rotate the holder (50) around the rotation shaft (44); and
the injection controller (95) is configured or programmed to cause the liquid coolant (CL) to be injected while the holder (50) is being rotated under the control of the second rotation controller (98).

6. The cutting device (10) according to any one of claims 1 through 5, further comprising a housing portion (42,43) extending in an axial direction (Z) of the cutting tool (6) or the dummy pin (7) grasped by the grasping portion (32) and housing the cutting tool (6) or the dummy pin (7), the housing portion (42,43) being located in the processing chamber (19); wherein
the controller (90) is configured or programmed to includes a third movement controller (99) configured or programmed to cause the moving mechanism (52) to move the grasping portion (32) in the processing chamber (19) such that at least a portion of the cutting tool (6) or the dummy pin (7) is located in the housing portion (42,43); and
the injection controller (95) is configured or programmed to cause the liquid coolant (CL) to be injected toward the cutting tool (6) or the dummy pin (7) while at least a portion of the cutting tool (6) or the dummy pin (7) is located in the housing portion (42,43) under the control of the third movement controller (99).

7. The cutting device (10) according to claim 6, further comprising a tool holder (8) attached to a predetermined position on the cutting tool (6) or the dummy pin (7) in the axial direction to determine a portion of the cutting tool (6) or the dummy pin (7) that is to be grasped by the grasping portion (32); wherein
the grasping portion (32) is configured to grasp a one-side portion of the cutting tool (6) or the dummy pin (7) relative to the tool holder (8) in the axial direction (Z);
the housing portion (42,43) includes:
a first portion (43a) having a diameter larger than a diameter of the cutting tool (6) or the dummy pin (7) and smaller than a diameter of the tool holder (8); and
a second portion (43b) connected with a one-side portion, in the axial direction (Z), of the first portion (43a), the second portion (43b) having a diameter larger than the diameter of the tool holder (8); and
the third movement controller (99) is configured or programmed to cause the grasping portion (32) to move such that at least a portion of the cutting tool (6) or the dummy pin (7) is housed in the first portion (43a) and at least portion of the tool holder (8) is housed in the second portion (43b).

8. The cutting device (10) according to claim 6, wherein the grasping portion (32) is configured to grasp a one-side portion, in the axial direction (Z), of the cutting tool (6) or the dummy pin (7);
the housing portion (42,43) includes:
a first portion (43a) having a diameter larger than a diameter of the cutting tool (6) or the dummy pin (7) and smaller than a diameter of the grasping portion (32); and
a second portion (43b) connected with a one-side portion, in the axial direction (Z), of the first portion (43a), the second portion (43b) having a diameter larger than the diameter of the grasping portion (32); and
the third movement controller (99) is configured or programmed to cause the grasping portion (32) to move such that at least a portion of the cutting tool (6) or the dummy pin (7) is housed in the first portion (43a) and at least portion of the grasping portion (32) is housed in the second portion (43b).

9. The cutting device (10) according to any one of claims 6 through 8, further comprising a tool magazine (40) including a housing hole (42,43), into which the cutting tool (6) or the dummy pin (7) is to be inserted, the tool magazine (40) being located in the processing chamber (19); wherein
the housing portion (42,43) includes the housing hole (42,43).

10. The cutting device (10) according to any one of claims 1 through 9, wherein:
the controller (90) is configured or programmed to include:
a determiner (92) configured or programmed to determine whether or not it is possible to start injecting the liquid coolant (CL) by the liquid injection portion (36) when the time counted by the time counter (91) reaches the predetermined time interval; and
a time extender (93) configured or programmed to extend the predetermined time interval when the determiner (92) determines that it is not possible to start injecting the liquid coolant (CL).

11. A method for injecting a liquid coolant (CL) in a cutting device (10) to cut a cutting target (5), the cutting device (10) including a holder (50) to hold a cutting target (5), a processing chamber (19) housing the holder (50) while the cutting target (5) is cut in the processing chamber (19), a grasping portion (32) to selectively grasp either one of a cutting tool (6) to cut the cutting target (5) or a dummy pin (7) not cutting the cutting target (5), the grasping portion (32) being located in the processing chamber (19), a moving mechanism (52) to move at least one of the holder (50) or the grasping portion (32) relative to the cutting target (5), and a liquid injection portion (36) to inject a liquid coolant (CL) toward an interior of the processing chamber (19), the method comprising:
counting time for a predetermined time interval (S101); and
causing the injection portion to inject the liquid coolant (CL) toward the interior of the processing chamber (19) when the time counted in the time counting step (S101) reaches the predetermined time interval (S104).
